# EUROPEAN PATENT SPECIFICATION

(11) **EP 3 317 638 B1**
(45) Date of publication and mention of the grant of the patent: **18.09.2019**
(21) Application number: 15738834.9
(22) Date of filing: 02.07.2015
(51) Int. Cl.: G01N 5/00

(54) **APPARATUS FOR SIMULTANEOUSLY AND CONTINUOUSLY DETERMINING A CHANGE IN LENGTH AND A CHANGE IN WEIGHT OF HEATED SAMPLES AND METHOD THEREFORE**
VORRICHTUNG ZUR GLEICHZEITIGEN UND KONTINUIERLICHEN BESTIMMUNG EINER VERÄNDERUNG DER LÄNGE UND EINER VERÄNDERUNG DES GEWICHTS VON ERWÄRMTEN PROBEN UND VERFAHREN DAFÜR
APPAREIL PERMETTANT UNE DÉTERMINATION SIMULTANÉE ET EN CONTINU D'UNE VARIATION EN LONGUEUR ET D'UNE VARIATION EN POIDS D'ÉCHANTILLONS CHAUFFÉS ET PROCÉDÉ ASSOCIÉ

(43) Date of publication of application: 09.05.2018
(73) Proprietor: Knauf Gips KG, 97346 Iphofen (DE)
(72) Inventor: DOSTAL, Peter, 97348 Markt Einersheim (DE); ALTENHÖFER, Thorsten, 97346 Iphofen (DE)
(86) International application number: PCT/EP2015/001339
(87) International publication number: WO 2017/000972

(56) References cited:
- EP-A1- 2 848 926
- EP-A2- 0 506 005
- US-A1- 2011 054 829

## Description

The invention relates to an apparatus for simultaneously and continuously determining a change in length and a change in weight of heated samples and to a method for simultaneously and continuously determining changes in length and changes in weight of heated samples.

Such a sample to be heated can be made of gypsum material. Gypsum is a building material widely used for structures inside of buildings, like separation walls or ceilings. In conventional drywall structures, gypsum plasterboards are mounted to a substructure. The substructure can be formed of u-shaped sheet metal profiles. The gypsum plasterboards are made of gypsum plaster arranged between two sheets of facing material. Drywall constructions provide many advantageous characteristics (like good acoustic properties or good fire resistance) by use of specific gypsum plasterboards.

In regard to fire resistance, the calcium sulfate material, especially gypsum, is preferred since calcium sulfate dihydrate contains a high amount of water even after setting. This water is bound in the crystal structure of the gypsum. When the gypsum is heated, for example during a fire in a building, the water bound in the crystal structure evaporates. The evaporating water has a maximum temperature close to the boiling temperature of water so that the temperature of the gypsum material does not rise significantly above this temperature as long as crystal water capable of evaporating is present inside the gypsum material. Advantageously, gypsum materials maintain a nearly constant temperature for a relative long period of time when they are exposed to fire in a burning building.

The determination of temperature dependent shrinkage (changes in length of the heated sample) and the weight reduction (changes in weight of the heated sample) of the calcium sulfate samples or samples of other expanding or shrinking materials allow conclusions to be drawn with respect to the behavior of these materials heated during the exposure to fire in a burning building or during standard tests in a fire chamber. In particular, if the temperature profile is chosen according to the temperature profile during standard tests in a fire chamber, this measurement allows the simulation of specific material characteristics in standard tests in a fire chamber. The simulation allows avoiding standard tests in a fire chamber which are often time and labor consuming. The characteristic behavior under the influence of high temperatures (fire) can be deduced from specific physical properties, like changes in length or changes in weight.

Changes in the length and in the weight occur when the gypsum samples begin to heat. At the beginning of the heating process the length of the gypsum sample increases while the weight strongly decreases. The reason for the expansion of the gypsum sample is the sudden evaporation of the crystal water. The evaporating water causes cracks of a size in the nano- to micrometer range. The occurrence of cracks leads to an increase of the inner surface of the gypsum sample. Thereafter, the length of the gypsum sample starts to decrease while the weight further decreases. When the crystal water in the gypsum sample has vanished, the gypsum crystal is sintered so that the inner surface decreases. The sintered gypsum sample shrinks below the dimensions of the originally unheated gypsum sample.

A method for determining the heat shrink of a gypsum sample is already known. The conventional method includes putting a gypsum sample in the furnace chamber of a furnace which can be heated with a specific temperature profile. A length measuring device uses a position sensor which extends into the heat chamber. The position sensor is a rod which is set under pressure by a spring and a free end of which is pressed against the surface of the sample by the spring force. The gypsum sample is fixed in a holder assembly so that the surface opposite to the surface to which the rod is pressed has a fixed position. This allows for determining a change in length by measuring a change in the position of the rod.

It is also known to determine changes in weight of gypsum samples. However those measurements are carried out before and after heating the gypsum sample. The determination of changes in weight before and after heating the gypsum sample provides no information about the change of the sample material during the heating process. The problem is that expansion and shrinkage occur in the material during the heating process. The exact timing was unknown till now. Moreover, the weight loss of the material is not constant during heating of the material.

Further known in the art as disclosed in EP 0 506 005 A2 is a device measuring a change in the physical state of a work, which is placed in a high temperature furnace by measuring the weight and dimension of the work.

Also known from US 2011/054829 A1 is a thermal apparatus capable of measuring a thermophysical property of a sample, which changes along with a temperature change, and of imaging and displaying the sample. For measuring the thermophysical property, the apparatus is equipped with a detection portion, which can be a heat flow detection portion or a detection portion for detecting the weight or the length of the sample.

The present invention relates to an apparatus for simultaneously and/or continuously determining a change in length and a change in weight of samples while these samples are heated. Continuously means in this context not only without interruption but also in defined time intervals, wherein at least three measurements, preferably at least 20 measurements are carried out during the heating course. However, measurements without interruption are preferred. The apparatus comprises a furnace having a furnace chamber for accommodating at least a first sample and a second sample, the furnace being capable of providing a predetermined temperature profile in the furnace chamber. The apparatus further comprises a length measuring device capable of detecting changes in length of the first sample while the first sample is arranged in the furnace chamber and a scale capable of detecting changes in weight of the second sample while the second sample is arranged in the furnace chamber.

The apparatus according to the invention allows advantageously that a change in length of the first sample is determined while simultaneously a change in weight of the second sample is determined during the heating of the samples. Within the furnace chamber, the first sample and the second sample are both heated so that the change in length of the first sample and the change in weight of the second sample are detected at the same time and, hence, at the same temperature along the temperature profile. This allows to continuously determining the change in weight while a change in length is detected and overcomes disadvantages of weight measurements carried out before and after heating of the gypsum sample. In this way, additional information about the sample material (inner surface, amount of water) can be generated during the heating process.

Advantageously, the apparatus further comprises a sample holder arranged in the furnace chamber. In a preferred embodiment, the sample holder is table-shaped so that there is a space below the table-shaped sample holder. Particularly preferred the table-shaped sample holder is of a size and shape so as to provide a space for arranging the second sample in the space below the sample holder. The table-shaped sample holder allows for a compact arrangement of the first sample and the second sample in the heated furnace chamber.

According to one particular embodiment, the sample holder comprises at the upper surface two support members on which the first sample can rest. The two support members are shaped so as to provide a minimum contact area between such a support member and the first sample. Cylinder shaped support members which are horizontally arranged do provide such a minimum contact area between the support member and the first sample. Having a minimal contact area is preferred in order to reduce the friction between the sample and its support, i.e. the support members, while expanding or shrinking. This avoids measurement errors and allows for a smooth recording without sudden jumps in the data which are method related and not process related.

Preferably the sample holder comprises a counter bearing that supports one side of the sample in longitudinal direction so that longitudinal size changes of the first sample can be detected by monitoring the movements of the opposite side of the first sample. The sample holder and the counter bearing can be formed in one piece by providing an additional surface at the sample holder, the additional surface preferably being oriented perpendicular to a common plane in which the support members are arranged.

In one embodiment, the length measuring device comprises a detector rod and a rod position sensor for detecting a change in the position of the detector rod along a longitudinal axis. At one end the detector rod has a detecting tip which extends from the outside into the furnace chamber so as to contact the first sample at a side of the first sample opposite to the side supported by the counter bearing. Preferably, the detector rod and the detector tip are made of a heat-resistant material, especially a ceramic material. In one specific embodiment, the length measuring device is a dilatometer.

Preferably, the scale comprises a sample support for supporting the second sample thereon. The sample support can be arranged on base columns in the furnace chamber, wherein the base columns extend to the outside of the furnace chamber and onto the scale. Preferably, the base columns are made of a heat-resistant material, for example a ceramic material. This arrangement allows that the scale with its sensitive electronics is arranged outside of the furnace chamber.

Advantageously, the furnace provides a temperature profile T = 345 log₁₀ (8t + 1) + 20 in the furnace chamber, wherein T is the temperature in °C and t is the time in minutes. This temperature profile corresponds to standard ISO 834-1; DIN EN 1363-1 used in standard fire chamber tests.

In one particular embodiment, the first and the second sample comprise a calcium sulfate material selected from the group comprising gypsum di-hydrate in any variety, gypsum semi-hydrate in any variety, anhydrite, or any mixture of these. In principle the apparatus can be used for determining the respective properties of many materials. However, the use of gypsum based samples is particularly advantageous since set gypsum shows the characteristic increase in size (inner surface due to evaporating water) and the subsequent decrease in size while being heated, wherein the loss in weight (water) is high at the beginning and slows during the heating of the sample.

In one additional embodiment, the apparatus comprises a recording device for (continuously) recording the detected length and/or weight changes of the first and the second sample, respectively. Additionally or alternatively, the apparatus further comprises a memory device for (continuously) storing the detected length and/or weight changes of the first and the second sample, respectively. More additionally or alternatively, the apparatus further comprises a control device for heating the furnace chamber according to a specific temperature profile.

In a further aspect the invention relates to a method according to claim 14 for simultaneously and continuously
- determining a change in length and a change in weight of heated samples. The method comprises:
   providing a furnace with a furnace chamber which can be heated according to a specific temperature profile;
- providing a length measuring device capable of detecting changes in length of a first sample that is arranged in the furnace chamber;
- providing a scale capable of detecting changes in weight of a second sample arranged in the furnace chamber; (thereafter)
- arranging the first sample in the furnace chamber so that the length measuring device is capable of detecting changes in length thereof, and arranging the second sample in the furnace chamber so that the scale is capable of detecting the change in weight thereof; (thereafter)
- increasing the temperature in the furnace chamber according to the temperature profile and detecting the changes in size of the first sample and the changes in weight of the second sample; and (simultaneously)
- recording continuously the detected changes.

The advantages discussed with regard to the apparatus apply vis-a-vis to the method either. Particularly preferred, the specific temperature profile is T = 345 log₁₀ (8t + 1) + 20 for a time of 60 minutes, wherein T is the temperature in °C and t is the time in minutes. In one specifically preferred embodiment of the method, the first and the second sample have the same chemical composition, the same shape and the same size.

In the following the invention will be explained in more detail with reference to drawings. Like reference numerals denote similar features throughout the drawings. In the drawings is:
- **Fig. 1:**: cross section of the apparatus according to the invention; and
- **Fig. 2:**: measurement showing the change in length and the change in weight of the samples

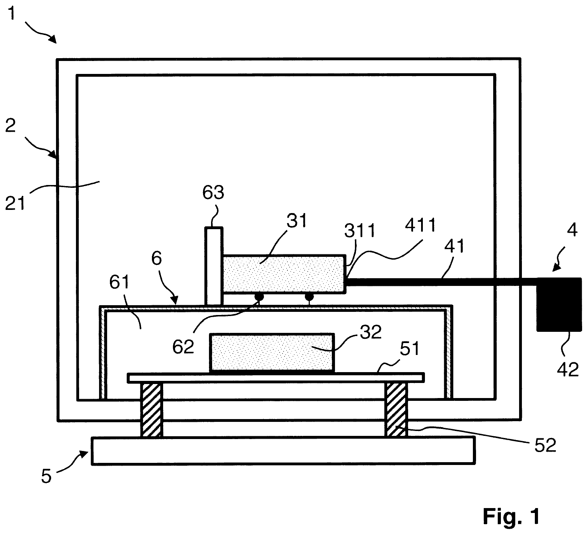

In **Fig. 1** an apparatus 1 according to the invention is used to determine a change in length of a first sample 31 while simultaneously a change in weight of a second (identically shaped and made) sample 32 is determined during the heating of the samples 31, 32. Within the furnace chamber 21, the first sample 31 and the second sample 32 can both at one time be heated according to the temperature profile T = 345 log10 (8t + 1) + 20, wherein T is the temperature in °C and t is the time in minutes. This allows to continuously determining the change in weight of the second sample 31 while a change in length of the first sample 31 is detected. Apparatus 1 overcomes disadvantages of weight measurements carried out before and after heating of such a sample 32 and, hence, generates additional information about the material during the heating process.

Preferably, the first and the second sample are calcium sulfate samples, especially gypsum samples.

Apparatus 1 comprises a furnace 2 having a furnace chamber 21 which accommodates the first sample 31 and second sample 32. Apparatus 1 further comprises a sample holder 6 arranged in the furnace chamber 21, the sample holder 6 being table-shaped having a space 61 below in which the second sample 32 is arranged. Thus, the space (61) below the table-shaped sample holder (6) is big enough for arranging the second sample (32) therein. The sample holder 6 comprises at the upper surface two cylinder shaped support members on stilts 62 on which the first sample 31 rests.

The sample holder 6 further comprises an counter bearing 63 providing support for the first sample 31 to allow for determining a change in length of first sample 31 by detecting a change in the position of a surface or side of the first sample 31 on a side opposite to the sample surface supported by the counter bearing 63. Length measuring device 4 comprises a detector rod 41 and a rod position sensor 42 for detecting a change in the position of the detector rod 41 along a longitudinal axis. The detector rod 41 is of a heat-resistant material, e.g. a ceramic material, and has at one end a detecting tip 411 which contacts the first sample 31 at a surface of the first sample 311 opposite to the side supported by the counter bearing 63.

During the determination of the changes in length, the apparatus is capable of continuously detecting changes in weight by use of a scale 5. Scale 5 is capable of detecting changes in weight of second sample 32 while the second sample is arranged in the furnace chamber 21. Scale 5 comprises a sample support 51 on which the second sample 32 is arranged. The sample support 51 is arranged on base columns 52 in the furnace chamber 21, wherein the base columns extend out of furnace chamber 21 onto the scale. The base columns are preferably made of a ceramic material.

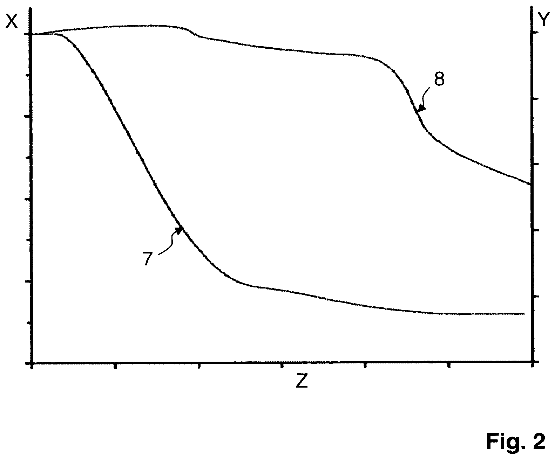

**Fig. 2** shows results for the determination of temperature dependent length changes of the heated sample and the weight reduction (changes in weight of the heated sample) of identical first and second gypsum samples having a size of 12 x 4 x 2 cm. The T temperature profile is T = 345 log₁₀ (8t + 1) + 20 for a time t of 60 minutes. Axis X is the relative change in length (upper length curve 8) and axis Y is the relative change in weight (lower weight curve 7). The time (corresponds to the temperature along the temperature profile) is shown at axis Z.
- The results shown in the **Fig.** 2 are provided by a method for simultaneously and continuously determining a change in length and a change in weight of heated gypsum samples. The method comprises:
- providing a furnace with a furnace chamber which can be heated according to a specific temperature profile;
- providing a length measuring device capable of detecting changes in length of a first gypsum sample that is arranged in the furnace chamber;
- providing a scale capable of detecting changes in weight of a second gypsum sample arranged in the furnace chamber;
- arranging the first gypsum sample in the furnace chamber so that the length measuring device is capable of detecting changes in length thereof, and arranging the second gypsum sample in the furnace chamber so that the scale is capable of detecting the change in weight thereof;
- increasing the temperature in the furnace chamber according to the temperature profile and detecting the changes in size of the first gypsum sample and the changes in weight of the second gypsum sample; and
- recording continuously the upper length curve 8 and the lower weight curve 7.

The upper length curve 8 shows a slight length increase after starting to heat up the first gypsum sample. At the beginning of the heating process the length of the first gypsum sample increases while the lower weight curve 7 strongly decreases. The reason for the dimensional expansion of the first gypsum sample presumably is the evaporation of the crystal water. The evaporating water seems to cause cracks of a size in the range from several nanometers to several microns. The occurrence of cracks causes an increase in the inner surface of the first gypsum sample that add up to a relative change in length (of about 0.5 to 2%).

When the main portion of the crystal water is evaporated, the length of the gypsum sample starts to decrease and the upper length curve 8 starts decreasing. Until this point the main change in weight (mass) has occurred. When the crystal water in the gypsum sample has vanished, the gypsum crystal is sintered so that the inner surface decreases. The sintered gypsum sample shrinks below the dimensions of the originally unheated gypsum sample, wherein the relative loss in weight lowers slowly down to about -21%.

Thus, the continuous and simultaneous determination of length and weight changes of materials expanding and/or shrinking while exposed to heat and/or fire allows for structural interpretations. It enables the targeted development of counter measures due to a better understanding of the involved processes.

## Claims

1. Apparatus (1) for simultaneously and continuously determining a change in length and a change in weight of samples (31, 32) while heated, the apparatus (1) comprising a furnace (2) having a furnace chamber (21) for simultaneously accommodating at least a first sample (31) and a second sample (32), the furnace (2) being capable of providing a predetermined temperature profile in the furnace chamber (21), and wherein the apparatus (1) further comprises a length measuring device (4) capable of detecting changes in length of the first sample (31) and a scale (5) capable of detecting changes in weight of the second sample (32) while both samples are arranged and heated in the furnace chamber (21).

2. Apparatus (1) according to claim 1, further comprising a sample holder (6) arranged in the furnace chamber (21).

3. Apparatus (1) according to claim 2, wherein the sample holder (6) is table-shaped so that there is a space (61) below the table-shaped sample holder (6), and wherein the space (61) preferably is of a size big enough for arranging the second sample (32) therein.

4. Apparatus (1) according to claim 2 or 3, wherein the sample holder (6) comprises at the upper surface two support members (62) on which the first sample (31) can rest, the two support members (62) being shaped so as to provide a minimum contact area between the support member (62) and the first sample (31).

5. Apparatus (1) according to claim 2 or 3, wherein the sample holder (6) comprises an counter bearing (63) at which the first sample (31) can be supported to allow for determining a change in length of the first sample (31) by detecting a change in the position of a surface of the first sample (311) on a side opposite to the sample supported by the counter bearing (63).

6. Apparatus (1) according to any one of the preceding claims, wherein the length measuring device (4) comprises a detector rod (41) and a rod position sensor (42) for detecting a change in the position of the detector rod (41) along a longitudinal axis, the detector rod (41) having at one end a detecting tip (411) which extends from the outside into the furnace chamber (21) so as to contact the first sample (31) at a surface of the first sample (31) opposite to the side in contact with the counter bearing (63).

7. Apparatus (1) according to claim 6, wherein the detector rod (41) and/or the detector tip (411) are made of a heat resisting material, especially a ceramic material.

8. Apparatus (1) according to any one of the preceding claims, wherein the length measuring device (4) is a dilatometer.

9. Apparatus (1) according to any one of the preceding claims, wherein the scale (5) comprises a sample support (51) for supporting the second sample (32) thereon, the support (51) being arranged on base columns (51) in the furnace chamber (21), the base columns extending to the outside of furnace chamber (21).

10. Apparatus (1) according to claim 9, wherein the base columns (51) are made of a heat resistant material, especially a ceramic material.

11. Apparatus (1) according to claim 9 or 10, wherein the base columns are arranged on the scale (5) outside of the furnace (2).

12. Apparatus (1) according to any one of the preceding claims, wherein the furnace (2) provides a temperature profile T = 345 log₁₀ (8t + 1) + 20 in the furnace chamber (21), wherein T is the temperature in °C and t is the time in minutes.

13. Apparatus (1) according to any one of the preceding claims, wherein the first and the second sample (31, 32) comprises a calcium sulfate material selected from the group comprising gypsum di-hydrate in any variety, gypsum semi-hydrate in any variety, anhydrite, or any mixture of these.

14. Method for simultaneously and continuously determining a change in length and a change in weight of heated samples (31, 32), the method comprising:
- providing a furnace (2) with a furnace chamber (21) which can be heated according to a specific temperature profile;
- providing a length measuring device (4) capable of detecting changes in length of a first sample (31) that is arranged in the furnace chamber (21);
- providing a scale (5) capable of detecting changes in weight of a second sample that is (32) arranged in the furnace chamber (21);
- arranging the first sample (31) in the furnace chamber (21) so that the length measuring device (4) is capable of detecting changes in length thereof, and arranging the second sample (32) in the furnace chamber (21) so that the scale (5) is capable of detecting the change in weight thereof;
- increasing the temperature in the furnace chamber (21) according to the specific temperature profile and detecting the changes in size of the first sample (31) and the changes in weight of the second sample (32).

15. Method according to claim 14, wherein the specific temperature profile is T = 345 log₁₀ (8t + 1) + 20 for a time of 60 minutes, wherein T is the temperature in °C and t is the time in minutes.

## Patentansprüche

1. Vorrichtung (1) zum gleichzeitigen und kontinuierlichen Bestimmen einer Änderung bei der Länge und einer Änderung beim Gewicht von Proben (31, 32), während sie erhitzt werden, wobei die Vorrichtung (1) einen Ofen (2) umfasst, der eine Ofenkammer (21) zum gleichzeitigen Aufnehmen wenigstens einer ersten Probe (31) und einer zweiten Probe (32), wobei der Ofen (2) dazu in der Lage ist, ein vorbestimmtes Temperaturprofil in der Ofenkammer (21) bereitzustellen, und wobei die Vorrichtung (1) ferner eine Längenmesseinrichtung (4), die dazu in der Lage ist, Änderungen bei der Länge der ersten Probe (31) zu erfassen, und eine Waage (5), die dazu in der Lage ist, Änderungen beim Gewicht der zweiten Probe zu erfassen, während beide Proben in der Ofenkammer (21) angeordnet sind und erhitzt werden, umfasst.

2. Vorrichtung (1) nach Anspruch 1, die ferner eine Probenhalterung (6) umfasst, die in der Ofenkammer (21) angeordnet ist.

3. Vorrichtung (1) nach Anspruch 2, wobei die Probenhalterung (6) tischförmig ist, so dass es einen Raum (61) unterhalb der tischförmigen Probenhalterung (6) gibt, und wobei der Raum (61) vorzugsweise eine Größe hat, die ausreichend groß ist zum Anordnen der zweiten Probe (32) in demselben.

4. Vorrichtung (1) nach Anspruch 2 oder 3, wobei die Probenhalterung (6) an der oberen Fläche zwei Stützelemente (62) umfasst, auf denen die erste Probe (31) aufliegen kann, wobei die zwei Stützelemente (62) so geformt sind, dass sie eine minimale Berührungsfläche zwischen dem Stützelement (62) und der ersten Probe (31) bereitstellen.

5. Vorrichtung (1) nach Anspruch 2 oder 3, wobei die Probenhalterung (6) ein Widerlager (63) umfasst, auf dem die erste Probe (31) getragen werden kann, um das Bestimmen einer Änderung bei der Länge der ersten Probe (31) durch Erfassen einer Änderung bei der Position einer Oberfläche der ersten Probe (311) auf einer zu der durch das Widerlager (63) getragenen Probe entgegengesetzten Seite zu ermöglichen.

6. Vorrichtung (1) nach einem der vorhergehenden Ansprüche, wobei die Längenmesseinrichtung (4) einen Detektorstab (41) und einen Stabpositionssensor (42) zum Erfassen einer Änderung bei der Position des Detektorstabes (41) entlang einer Längsachse umfasst, wobei der Detektorstab (41) an einem Ende eine Fühlspitze (411) aufweist, die sich von der Außenseite in die Ofenkammer (21) erstreckt, so dass sie die erste Probe (31) an einer Oberfläche der ersten Probe (31), entgegengesetzt zu der Seite in Berührung mit dem Widerlager (63), berührt.

7. Vorrichtung (1) nach Anspruch 6, wobei der Detektorstab (41) und/oder die Detektorspitze (411) aus einem hitzebeständigen Werkstoff, insbesondere einem Keramikwerkstoff, hergestellt sind.

8. Vorrichtung (1) nach einem der vorhergehenden Ansprüche, wobei die Längenmesseinrichtung (4) ein Dilatometer ist.

9. Vorrichtung (1) nach einem der vorhergehenden Ansprüche, wobei die Waage (5) einen Probenträger (51) zum Tragen der zweiten Probe (32) auf demselben umfasst, wobei der Träger (51) auf Basissäulen (51) in der Ofenkammer (21) angeordnet ist, wobei sich die Basissäulen zur Außenseite der Ofenkammer (21) erstrecken.

10. Vorrichtung (1) nach Anspruch 9, wobei die Basissäulen (51) aus einem hitzebeständigen Werkstoff, insbesondere einem Keramikwerkstoff, hergestellt sind.

11. Vorrichtung (1) nach Anspruch 9 oder 10, wobei die Basissäulen auf der Waage (5) außerhalb des Ofens (2) angeordnet sind.

12. Vorrichtung (1) nach einem der vorhergehenden Ansprüche, wobei der Ofen (2) ein Temperaturprofil T = 345 log₁₀ (8t + 1) + 20 in der Ofenkammer (21) bereitstellt, wobei T die Temperatur in °C ist und t die Zeit in Minuten ist.

13. Vorrichtung (1) nach einem der vorhergehenden Ansprüche, wobei die erste und die zweite Probe (31, 32) einen Kalziumsulfat-Werkstoff umfassen, der ausgewählt ist aus der Gruppe, die Gips-Dihydrat in einer beliebigen Varietät, Gips-Semihydrat in einer beliebigen Varietät, Anhydrit oder ein beliebiges Gemisch derselben umfasst.

14. Verfahren zum gleichzeitigen und kontinuierlichen Bestimmen einer Änderung bei der Länge und einer Änderung beim Gewicht von erhitzten Proben (31, 32), wobei das Verfahren Folgendes umfasst:
- Bereitstellen eines Ofens (2) mit einer Ofenkammer (21), die entsprechend einem spezifischen Temperaturprofil erhitzt werden kann,
- Bereitstellen einer Längenmesseinrichtung (4), die dazu in der Lage ist, Änderungen bei der Länge einer ersten Probe (31), die in der Ofenkammer (21) angeordnet ist, zu erfassen,
- Bereitstellen einer Waage (5), die dazu in der Lage ist, Änderungen beim Gewicht einer zweiten Probe (32), die in der Ofenkammer (21) angeordnet ist, zu erfassen,
- Anordnen der ersten Probe (31) in der Ofenkammer (21) so, dass die Längenmesseinrichtung (4) dazu in der Lage ist, Änderungen bei der Länge derselben zu erfassen, und Anordnen der zweiten Probe (32) in der Ofenkammer (21) so, dass die Waage (5) dazu in der Lage ist, Änderungen beim Gewicht derselben zu erfassen,
- Steigern der Temperatur in der Ofenkammer (21) entsprechend dem spezifischen Temperaturprofil und Erfassen der Änderungen bei der Länge der ersten Probe (31) und der Änderungen beim Gewicht der zweiten Probe (32).

15. Verfahren nach Anspruch 14, wobei das spezifische Temperaturprofil T = 345 log₁₀ (8t + 1) + 20 für eine Zeit von 60 Minuten ist, wobei T die Temperatur in °C ist und t die Zeit in Minuten ist.

## Revendications

1. Dispositif (1) pour déterminer simultanément et en continu une variation de longueur et une variation de poids des échantillons (31,32) pendant qu'ils sont chauffés, le dispositif (1) comprenant un four (2) ayant une chambre de four (21) pour renfermer simultanément au moins un premier échantillon (31) et un second échantillon (32), le four (2) étant capable de fournir un profil de température prédéterminé dans la chambre de four (21) et dans lequel le dispositif (1) comprend en outre un dispositif de mesure de longueur (4) capable de détecter les variations de longueur du premier échantillon (31) et une balance (5) capable de détecter les variations de poids du second échantillon (32) alors que les deux échantillons sont disposés et chauffés dans la chambre de four (21).

2. Dispositif (1) selon la revendication 1, comprenant en outre un support d'échantillons (6) disposé dans la chambre de four (21).

3. Dispositif (1) selon la revendication 2, dans lequel le support d'échantillons (6) est en forme de table, de sorte qu'il y ait un espace (61) au-dessous du support d'échantillons en forme de table (6), et dans lequel l'espace (61) est de préférence d'une taille suffisante pour disposer le second échantillon (32) dans celui-ci.

4. Dispositif (1) selon la revendication 2 ou 3, dans lequel le support d'échantillons (6) comprend au niveau de la surface supérieure deux éléments de soutien (62) sur lesquels le premier échantillon (31) peut reposer, les deux éléments de soutien (62) étant façonnés de manière à fournir une zone de contact minimal entre l'élément de soutien (62) et le premier échantillon (31).

5. Dispositif (1) selon la revendication 2 ou 3, dans lequel le support d'échantillons (6) comprend un contre palier (63) au niveau duquel le premier échantillon (31) peut être soutenu pour permettre la détermination d'une variation de longueur du premier échantillon (31) en détectant une variation de la position d'une surface du premier échantillon (311) sur un côté opposé à l'échantillon soutenu par le contre palier (63).

6. Dispositif (1) selon une quelconque des revendications précédentes, dans lequel le dispositif de mesure de longueur (4) comprend une tige de détecteur (41) et un capteur de position de tige (42) pour détecter une variation de la position de la tige de détecteur (41) le long d'un axe longitudinal, la tige de détecteur (41) ayant au moins une pointe de détection (411) qui s'étend de l'extérieur à l'intérieur de la chambre de four (21) de manière à contacter le premier échantillon (31) au niveau d'une surface du premier échantillon (31) opposée au côté en contact avec le contre palier (63).

7. Dispositif (1) selon la revendication 6, dans lequel la tige de détecteur (41) et/ou la pointe de détecteur (411) sont constituées d'un matériau résistant à la chaleur, notamment un matériau céramique.

8. Dispositif (1) selon une quelconque des revendications précédentes, dans lequel le dispositif de mesure de longueur (4) est un dilatomètre.

9. Dispositif (1) selon une quelconque des revendications précédentes, dans lequel la balance (5) comprend un support d'échantillons (51) pour soutenir le second échantillon (32) sur celle-ci, le support (51) étant disposé sur des colonnes de base (51) dans la chambre de four (21), les colonnes de base s'étendant vers l'extérieur de la chambre de four (21).

10. Dispositif (1) selon la revendication 9, dans lequel les colonnes de base (51) sont constituées d'un matériau résistant à la chaleur, notamment un matériau céramique.

11. Dispositif (1) selon la revendication 9 ou 10, dans lequel les colonnes de base sont disposées sur la balance (5) à l'extérieur du four (2).

12. Dispositif (1) selon une quelconque des revendications précédentes, dans lequel le four (2) fournit un profil de température T = 345 log₁₀ (8t+1) +20 dans la chambre de four (21), dans lequel T est la température en degrés Celsius et t est le temps en minutes.

13. Dispositif (1) selon une quelconque des revendications précédentes, dans lequel le premier le second échantillon (31,32) comprend un matériau de sulfate de calcium sélectionné dans le groupe comprenant du dihydrate de gypse dans n'importe quelle variété, du semi hydrate de gypse dans n'importe quelle variété, de l'anhydrite ou n'importe quels mélanges de ces derniers.

14. Procédé pour déterminer simultanément et en continu une variation de longueur et une variation de poids des échantillons chauffés (31,32), le procédé comprenant de :
- fournir un four (2) avec une chambre de four(21) qui peut être chauffée selon un profil de température spécifique ;
- fournir un dispositif de mesure de longueur (4) capable de détecter les variations de longueur du premier échantillon (31) qui est disposé dans la chambre de four (21) ;
- fournir une balance (5) capable de détecter les variations de poids d'un second échantillon (32) qui est disposé dans la chambre de four (21) ;
- disposer le premier échantillon (31) dans la chambre de four (21) de sorte que le dispositif de mesure de longueur (4) soit capable de détecter les variations de longueur de ce dernier, et disposer le second échantillon (32) dans la chambre de four (21) de sorte que la balance (5) soit capable de détecter la variation de poids de ce dernier ;
- augmenter la température dans la chambre de four (21) selon le profil de température spécifique et détecter les variations de taille du premier échantillon (31) et les variations de poids du second échantillon (32).

15. Procédé selon la revendication 14, dans lequel le profil de température spécifique est T = 345 log₁₀ (8t+1) +20 pour un temps de 60 minutes, dans lequel T est la température en degrés Celsius et t est le temps en minutes.
